# EUROPÄISCHE PATENTSCHRIFT

(11) **EP 1 787 879 B1**
(45) Veröffentlichungstag und Bekanntmachung des Hinweises auf die Patenterteilung: **27.08.2008**
(21) Anmeldenummer: 06023592.6
(22) Anmeldetag: 14.11.2006
(51) Int. Cl.: B60T 7/10

(54) **Handbremseinrichtung**
Parking brake lever
Levier pour frein de stationnement

(30) Priorität: 18.11.2005 AT 18832005
(43) Veröffentlichungstag der Anmeldung: 23.05.2007
(73) Patentinhaber: DGS Druckguss Systeme AG, 9015 St. Gallen (CH)
(72) Erfinder: Pichlbauer, Peter, 9403 Goldach (CH)
(74) Vertreter: Babeluk, Michael

(56) Entgegenhaltungen:
- EP-A2- 1 127 760
- EP-A2- 1 273 495
- FR-A- 1 321 349
- US-A- 3 850 048

## Beschreibung

Die Erfindung betrifft eine Handbremseinrichtung mit einem einen ersten Hebelarm ausbildenden Grundkörper, der im Leichtmetall-Druckgussverfahren oder im Spritzgussverfahren hergestellt wird, wobei der Grundkörper um eine Drehachse drehbar in einem fahrzeugfesten Halter gelagert ist, mit einem zweiten Hebelarm zur Verbindung mit einem durch ein Seil oder eine Stange gebildeten Betätigungsteil.

Im Automobilbau werden im wachsenden Umfang Leichtbaufunktionsteile eingesetzt, um das Fahrzeuggewicht zu verringern. Dabei handelt es sich im Allgemeinen um Bauteile, die mechanische Belastungen übertragen oder aufnehmen sollen, wie beispielsweise einen Handbremshebel. Die Fertigung solcher Bauteile im Aluminium- oder Magnesiumdruckgussverfahren oder im Spritzguss ermöglicht es, eine beträchtliche Gewichtsreduktion bei vorbestimmten Festigkeitseigenschaften zu erreichen.

Aus der EP 1 273 495 A2 ist ein Handbremshebel für Kraftfahrzeuge bekannt, welcher mittels einen Druckgussverfahrens hergestellt ist. Erster und zweiter Hebelarm des Handbremshebels sind dabei als einteiliges Druckgussteil ausgebildet. Durch die relativ komplizierte Formgebung ist allerdings ein relativ hoher Fertigungsaufwand erforderlich.

Die EP 0 963 891 und die US 3 850 048 A beschreiben Handbremseinrichtungen mit ersten und zweiten Hebelarmen, welche als separate Bauteile ausgebildet sind.

Diese Handbremseinrichtungen sind weder im Leichtmetall-Druckgussverfahren, noch im Spritzgussverfahren hergestellt.

Die EP 1 127 760 B1 offenbart eine Betätigungsvorrichtung für eine Feststellbremse mit einem Handbremshebel, der einen ersten und einen zweiten Hebelarm aufweist. Der Betätigungshebel besteht aus einem Kunststoff-Spritzteil oder einem Gussteil aus einer Leichtmetall-Legierung. Erster und zweiter Hebelarm sind einstückig ausgebildet.

Die FR 1 321 349 A zeigt die Lagerung eines Handbremshebels über Lagerbuchsen im Halter, wobei eine Drehachse drehbar in einer Lagerbuchse gelagert ist, welche Lagerbuchsen in rahmenfesten Hülsen angeordnet sind.

Aufgabe der Erfindung ist es, die genannten Nachteile zu vermeiden, und den Herstellungsaufwand zu vermindern.

Erfindungsgemäß erfolgt dies dadurch, dass der zweite Hebelarm als separater Bauteil ausgebildet ist, welcher fest mit dem Grundkörper verbunden ist, wobei der zweite Hebelarm über zumindest einen Verbindungsteil formschlüssig mit dem Grundkörper verbunden ist, dass der Grundkörper über vorzugsweise aus Kunststoff bestehende Lagerbuchsen, im Halter drehbar gelagert ist, wobei erste Lagerbuchsen drehbar in zweiten Lagerbuchsen gelagert sind und dass jede erste Lagerbuchse eine Nabe zur Aufnahme des Verbindungsteil aufweist.

Der zweite Hebel kann dabei als metallischer Bestandteil ausgebildet sein.

Der Verbindungsteil wird bevorzugt durch einen Verbindungsstift gebildet, welcher zumindest einen profilierten, vorzugsweise mehrkantigen, beispielsweise vierkantigen Abschnitt aufweist. Der Verbindungsstift kann etwa einen im Wesentlichen quadratischen Querschnitt aufweisen.

In einer einfachen Ausführungsvariante der Erfindung ist vorgesehen, dass der zweite Hebelarm eine Verbindungsöffnung zur Aufnahme des Verbindungsstiftes aufweist, wobei die Form und Größe der Verbindungsöffnung dem Querschnitt des Verbindungsstiftes entspricht. Der Verbindungsstift kann beispielsweise aus Stahl bestehen. Um eine feste Verbindung mit dem zweiten Hebel zu bewirken, können Verbindungsstift und zweiter Hebel miteinander verschweißt sein.

Der Verbindungsstift ist koaxial zur Drehachse des Grundkörpers angeordnet und durchdringt eine Aufnahmeöffnung des Grundkörpers in Richtung der Drehachse.

Um eine feste und spielfreie Verbindung zwischen dem Verbindungsstift und dem Grundkörper zu schaffen, ist es besonders vorteilhaft, wenn der Verbindungsstift drehfest in einem vorzugsweise aus Kunststoff bestehenden Zwischenteil und dieser Zwischenteil seinerseits drehfest in der Aufnahmeöffnung des Grundkörpers angeordnet ist. Vorzugsweise ist dabei vorgesehen, dass der Verbindungsstift formschlüssig mit dem Zwischenteil verbunden ist, wobei der Zwischenteil im Wesentlichen als Hülse ausgebildet ist, dessen innerer Querschnitt in Form und Größe dem Querschnitt des Verbindungsstifts entspricht. Bei Betätigung der Handbremseinrichtung wird die Betätigungskraft über den ersten Hebelarm, den Zwischenteil und den Verbindungsstift auf den zweiten Hebelarm übertragen, welcher mit einer Betätigungseinrichtung, beispielsweise einem Seil oder einer Zugstange, verbunden ist.

Jede erste Lagerbuchse weist eine Nabe zur Aufnahme des Verbindungsstiftes auf, deren Form und Größe dem Querschnitt des Verbindungsstiftes entspricht. Auf diese Weise ist eine drehfeste Verbindung zwischen Verbindungsstift und ersten Lagerbuchsen möglich. Die zweiten Lagerbuchsen sind in Lagerbohrungen des Halters unverdrehbar angeordnet.

Der Grundkörper der Handbremseinrichtung ist somit über den Verbindungsstift und die Lagerbuchsen in Lagerbohrungen des Halters gelagert.

Der Grundkörper mit dem ersten Hebelarm ist im Leichtmetalldruckgussverfahren hergestellt. Die Kunststoffteile, wie Lagerbuchsen und Zwischenteil lassen sich im Spritzgussverfahren herstellen. Der zweite Hebelarm ist aus gestanztem Blech herstellbar.

Durch den kombinierten Einsatz von Druckguss-, Spritzguss- und Stanzteilen lassen sich die Herstellungskosten für die Handbremseinrichtung wesentlich reduzieren.

Die Erfindung wird im Folgenden anhand der Figur näher erläutert. Es zeigen:

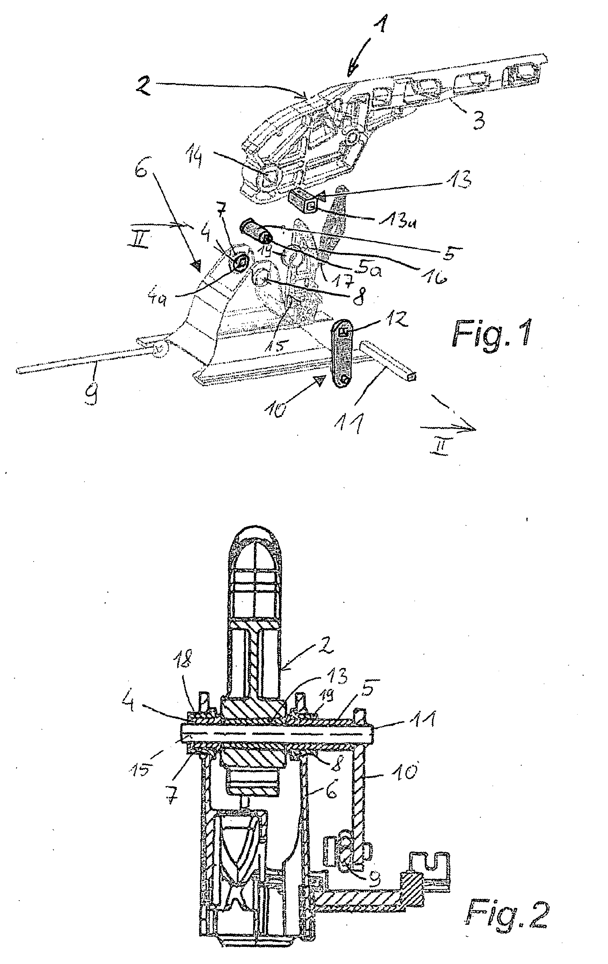

- Fig. 1: die erfindungsgemäße Handbremseinrichtung in einer Explosionsdarstellung; und
- Fig. 2: die Handbremseinrichtung in einem Schnitt gemäß der Linie II - II in Fig. 1.

Die Handbremseinrichtung 1 weist einen im Leichtmetalldruckgussverfahren hergestellten Grundkörper 2 auf, welcher einen ersten Hebelarm 3 ausbildet. Der Grundkörper 2 ist über Lagerbuchsen 4, 5, 18, 19 drehbar in einem fahrzeugfesten Halter 6 gelagert, wobei die ersten Lagerbuchsen 4, 5 in zweiten Lagerbuchsen 18, 19 drehbar gelagert sind. Die zweiten Lagerbuchsen 18, 19 sind in Lagerbohrungen 7, 8 des Halters unverdrehbar angeordnet. Ein an einem Betätigungsteil 9, beispielsweise einem Seil oder einer Zugstange, angreifender zweiter Hebelarm 10 ist drehfest mit dem Grundkörper 2 verbunden. Die Verbindung mit dem Grundkörper 2 erfolgt im Ausführungsbeispiel über einen als Vierkant ausgebildeten Verbindungsstift 11, welcher eine Verbindungsöffnung 12 des zweiten Hebelarms 10 durchdringt. Die Verbindungsöffnung 12 weist einen Querschnitt auf, dessen Form und Größe dem Querschnitt des Verbindungsstiftes 11 entspricht, so dass der Verbindungsstift 11 und der zweite Hebelarm 10 eine formschlüssige Verbindung bilden. Zusätzlich können der durch einen gestanzten Blechteil gebildete zweite Hebelarm 10 und der metallische Verbindungsstift 11 miteinander verschweißt sein.

Der Verbindungsstift 11 ist in einen hülsenartigen Zwischenteil 13 aus Kunststoff eingesetzt, dessen innerer Querschnitt 13a in Form und Größe ebenfalls dem Querschnitt des Verbindungsstiftes 11 entspricht, so dass der Zwischenteil 13 und der Verbindungsstift 11 ebenfalls formschlüssig miteinander verbunden sind. Der Zwischenteil 13 ist in einer Aufnahmeöffnung 14 des Grundkörpers 2 eingesetzt, wobei der Zwischenteil 13 drehsicher mit dem Grundkörper 2 verbunden ist. Die Drehverbindung erfolgt auch hier am einfachsten über den Formschluss zwischen der Aufnahmeöffnung 14 und dem Zwischenteil 13. Im Ausführungsbeispiel weist auch der aus Kunststoff bestehende Zwischenteil 13 ein Vierkantprofil auf. Der Querschnitt der Aufnahmeöffnung 14 entspricht in Form und Größe diesem Vierkantprofil des Zwischenteiles 13, so dass eine drehfeste Verbindung entsteht.

Somit wird bei Betätigen der Handbremseinrichtung 1 über den ersten Hebelarm 3 das Drehmoment um die Drehachse 15 über den Zwischenteil 13 und den Verbindungsstift 11 auf den zweiten Hebelarm 10 übertragen, welcher eine Zug- oder Druckkraft auf den Betätigungsteil 9 ausübt.

Die ersten Lagerbuchsen 4, 5 weisen Naben 4a, 5a auf, deren Querschnitt in Form und Größe dem Querschnitt des Verbindungsstiftes 11 entspricht, so dass die Enden des Verbindungsstiftes 11 in die Naben 4a, 5a eingesetzt werden können. Dadurch wird die Drehbewegung des Grundkörpers 2 über den Verbindungsstift 11 auf die ersten Lagerbuchsen 4, 5 übertragen, welche in den in Lagerbohrungen 7, 8 des Halters 6 eingesetzten zweiten Lagerbuchsen 18, 19 drehbar gelagert sind.

Mit den Bezugszeichen 16 und 17 sind Sperrsegment bzw. Sperrklinke der Handbremseinrichtung 1 angedeutet.

Durch den Einsatz von Druckgussteilen, Spritzgussteilen und Stanzteilen können die Herstellungskosten der Handbremseinrichtung 1 wesentlich verringert und Gewicht eingespart werden.

## Patentansprüche

1. Handbremseinrichtung (1) mit einem einen ersten Hebelarm (3) ausbildenden Grundkörper (2), der im Leichtmetall-Druckgussverfahren oder im Spritzgussverfahren hergestellt wird, wobei der Grundkörper (2) um eine Drehachse (15) drehbar in einem fahrzeugfesten Halter (6) gelagert ist, mit einem zweiten Hebelarm (10) zur Verbindung mit einem durch ein Seil oder eine Stange gebildeten Betätigungsteil (9), **dadurch gekenntzeichnet**, dass der zweite Hebelarm (10) als separater Bauteil ausgebildet ist, welcher fest mit dem Grundkörper (2) verbunden ist, wobei der zweite Hebelarm (10) über zumindest einen Verbindungsteil formschlüssig mit dem Grundkörper (2) verbunden ist, dass der Grundkörper (2) über vorzugsweise aus Kunststoff bestehende Lagerbuchsen (4, 5, 18, 19) im Halter (6) drehbar gelagert ist, wobei erste Lagerbuchsen (4, 5) drehbar in zweiten Lagerbuch-sen (18, 19) gelagert sind und dass jede erste Lagerbuchse (4, 5) eine Nabe (4a, 5a) zur Aufnahme des Verbindungsteil aufweist.

2. Handbremseinrichtung (1) nach Anspruch 1, **dadurch gekennzeichnet, dass** der Verbindungsteil (11) durch einen Verbindungsstift (11) gebildet ist, welcher zumindest einen profilierten, vorzugsweise mehrkantigen Abschnitt aufweist.

3. Handbremseinrichtung (1) nach Anspruch 2, **dadurch gekennzeichnet, dass** der Verbindungsstift (11) einen vierkantigen, vorzugsweise im Wesentlichen quadratischen Querschnitt aufweist.

4. Handbremseinrichtung (1) nach Anspruch 2 oder 3, **dadurch gekennzeichnet, dass** der zweite Hebelarm (10) eine Verbindungsöffnung (12) zur Aufnahme des Verbindungsstiftes (11) aufweist, wobei die Form und Größe der Verbindungsöffnung (12) dem Querschnitt des Verbindungsstiftes (11) entspricht.

5. Handbremseinrichtung (1) nach einem der Ansprüche 2 bis 4, **dadurch gekennzeichnet, dass** der Verbindungsstift (11) koaxial zur Drehachse (15) in einer Aufnahmebohrung (14) des Grundkörpers (2) angeordnet ist.

6. Handbremseinrichtung (1) nach einem der Ansprüche 2 bis 5, **dadurch gekennzeichnet, dass** der Verbindungsstift (11) den Grundkörper (2) in Richtung der Drehachse (15) durchdringt.

7. Handbremseinrichtung (1) nach einem der Ansprüche 2 bis 6, **dadurch gekennzeichnet, dass** der Verbindungsstift (11) mit dem Grundkörper (2) drehverbunden ist.

8. Handbremseinrichtung (1) nach einem der Ansprüche 2 bis 7, **dadurch gekennzeichnet, dass** der Verbindungsstift (11) drehfest in einem vorzugsweise aus Kunststoff bestehenden Zwischenteil (13) und dieser Zwischenteil (13) seinerseits drehfest in der Aufnahmeöffnung (14) des Grundkörpers (2) angeordnet ist.

9. Handbremseinrichtung (1) nach Anspruch 8, **dadurch gekennzeichnet, dass** der Verbindungsstift (11) formschlüssig mit dem Zwischenteil (13) verbunden ist, wobei der Zwischenteil (13) im Wesentlichen als Hülse ausgebildet ist, dessen innerer Querschnitt (13a) in Form und Größe dem Querschnitt des Verbindungsstifts (11) entspricht.

10. Handbremseinrichtung (1) nach einem der Ansprüche 2 bis 9, **dadurch gekennzeichnet, dass** der Verbindungsstift (11) drehfest, vorzugsweise formschlüssig, mit jeder ersten Lagerbuchse (4, 5) verbunden ist.

11. Handbremseinrichtung (1) nach einem der Ansprüche 2 bis 10, **dadurch gekennzeichnet, dass** die Form und Größe der Nabe (4a, 5a) dem Querschnitt des Verbindungsstiftes (11) entspricht.

12. Handbremseinrichtung (1) nach einem der Ansprüche 1 bis 11, **dadurch gekennzeichnet, dass** die zweiten Lagerbuchsen (18, 19) in Lagerbohrungen (7, 8) des Halters (6) eingesetzt sind.

13. Handbremseinrichtung (1) nach einem der Ansprüche 1 bis 12, **dadurch gekennzeichnet, dass** der zweite Hebelarm (10) als metallischer Stanzteil ausgebildet ist.

14. Handbremseinrichtung (1) nach einem der Ansprüche 2 bis 13, **dadurch gekennzeichnet, dass** der Verbindungsstift (11) aus einem Eisenwerkstoff besteht und vorzugsweise mit dem zweiten Hebelarm (10) verschweißt ist.

## Claims

1. Handbrake assembly (1) with a main body (2) forming a first lever arm (3) which is made of light metal by a pressure-moulding or injection-moulding process, said main body (2) being rotatably held by a rotation axle (15) in a bracket (6) that is rigidly attached to the vehicle, and with a second lever arm (10) connected to an actuating part (9) formed by a cable or rod, **characterised in that** the second lever arm (10) is configured as a separate part which is fixedly attached to the main body (2), said second lever arm (10) being locked onto the main body (2) by at least one joining part, and that the main body (2) is rotatably borne in the bracket (6) by means of bearing bushes (4, 5, 18, 19) preferably made of plastic, the first bearing bushes (4, 5) being rotatably held in the second bearing bushes (18, 19), and each first bearing bush (4, 5) having a hub (4a, 5a) for receiving the joining part.

2. Handbrake assembly (1) according to claim 1, **characterised in that** the joining part (11) is formed by a joining pin (11), which has at least one section with a profile, preferably a polygonal profile.

3. Handbrake assembly (1) according to claim 2, **characterised in that** the joining pin (11) has a tetragonal, preferably essentially square cross-section.

4. Handbrake assembly (1) according to claim 2 or 3, **characterised in that** the second lever arm (10) has a joining orifice (12) for receiving the joining pin (11), shape and size of said orifice (12) matching the cross-section of the joining pin (11).

5. Handbrake assembly (1) according to any of claims 2 to 4, **characterised in that** the joining pin (11) is located in a receiving bore (14) of the main body (2) coaxial with the rotation axle (15).

6. Handbrake assembly (1) according to any of claims 2 to 5, **characterised in that** the joining pin (11) passes through the main body (2) in the direction of the rotation axle (15).

7. Handbrake assembly (1) according to any of claims 2 to 6, **characterised in that** the joining pin (11) turns together with the main body (2).

8. Handbrake assembly (1) according to any of claims 2 to 7, **characterised in that** the joining pin (11) is non-rotatingly held in an intermediate part (13) preferably made of plastic, and that said intermediate part (13) itself is non-rotatingly held in the receiving orifice (14) of the main body (2).

9. Handbrake assembly (1) according to claim 8, **characterised in that** the joining pin (11) is locked in the intermediate part (13), said intermediate part (13) essentially being configured as a bush whose interior cross-section (13a) matches the cross-section of the joining pin (11) in shape and size.

10. Handbrake assembly (1) according to any of claims 2 to 9, **characterised in that** the joining pin (11) is non-rotatingly held, and preferably locked, in each first bearing bush (4, 5).

11. Handbrake assembly (1) according to any of claims 2 to 10, **characterised in that** size and shape of the hub (4a, 5a) match the cross-section of the joining pin (11).

12. Handbrake assembly (1) according to any of claims 1 to 11, **characterised in that** the second bearing bushes (18, 19) are inserted in bearing bores (7, 8) of the bracket (6).

13. Handbrake assembly (1) according to any of claims 1 to 12, **characterised in that** the second lever arm (10) is a die-cut metal part.

14. Handbrake assembly (1) according to any of claims 2 to 13, **characterised in that** the joining pin (11) is made of ferrous material and is preferably welded to the second lever arm (10).

## Revendications

1. Installation de frein à main (1) comportant un corps de base (2) formant un premier bras de levier (3) fabriqué par un procédé d'injection de métal léger et/ou par un procédé d'injection de fonte, le corps de base (2) étant monté à rotation autour d'un axe de rotation (15) dans un support (6) solidaire du véhicule, un second bras de levier (10) pour être relié à une pièce d'actionnement (9) formée par un câble ou une tige,
**caractérisée en ce que**
le second bras de levier (10) est réalisé sous la forme d'une pièce distincte reliée solidairement au corps de base (2),
le second bras de levier (10) est relié par au moins une pièce de liaison, par une liaison par la forme au corps de base (2),
le corps de base (2) est monté à rotation dans le support (6), de préférence par l'intermédiaire de coussinets (4, 5, 18, 19) en matière plastique,
les premiers coussinets (4, 5) étant montés à rotation dans les seconds coussinets (18, 19) et
chaque premier coussinet (4, 5) comporte un moyeu (4a, 5a) pour recevoir la pièce de liaison.

2. Installation de frein à main (1) selon la revendication 1,
**caractérisée en ce que**
la pièce de liaison (11) est formée par une broche de liaison (11) ayant une section au moins profilée et de préférence polygonale.

3. Installation de frein à main (1) selon la revendication 2,
**caractérisée en ce que**
la broche de liaison (11) a une section quadrangulaire, de préférence pratiquement carrée.

4. Installation de frein à main (1) selon la revendication 2 ou 3,
**caractérisée en ce que**
le second bras de levier (10) comporte un orifice de liaison (12) pour recevoir la broche de liaison (11), la forme et la dimension de l'orifice de liaison (12) correspondant à la section de la broche de liaison (11).

5. Installation de frein à main (1) selon l'une des revendications 2 à 4,
**caractérisée en ce que**
la broche de liaison (11) est installée coaxialement à l'axe de rotation (15) dans un perçage de réception (14) du corps de base (2).

6. Installation de frein à main (1) selon l'une des revendications 2 à 5,
**caractérisée en ce que**
la broche de liaison (11) traverse le corps de base (2) en direction de l'axe de rotation (15).

7. Installation de frein à main (1) selon l'une des revendications 2 à 6,
**caractérisée en ce que**
la broche de liaison (11) est solidaire en rotation du corps de base (2).

8. Installation de frein à main (1) selon l'une des revendications 2 à 7,
**caractérisée en ce que**
la broche de liaison (11) est montée solidairement en rotation dans une pièce intermédiaire (13), de préférence en matière plastique et cette pièce intermédiaire (13) est elle-même solidaire en rotation de l'orifice de réception (14) du corps de base (2).

9. Installation de frein à main (1) selon la revendication 8,
**caractérisée en ce que**
la broche de liaison (11) est reliée par une liaison par la forme à la pièce intermédiaire (13),
la pièce intermédiaire (13) est principalement réalisée sous la forme d'un manchon dont la section intérieure (13a) correspond en forme et en dimensions à la section de la broche de liaison (11).

10. Installation de frein à main (1) selon l'une des revendications 2 à 9,
**caractérisée en ce que**
la broche de liaison (11) est reliée solidairement en rotation et de préférence par une liaison par la forme à chaque premier coussinet de palier (4, 5).

11. Installation de frein à main (1) selon l'une des revendications 2 à 10,
**caractérisée en ce que**
la forme et la dimension du moyeu (4a, 5a) correspond à la section de la broche de liaison (11).

12. Installation de frein à main (1) selon l'une des revendications 1 à 11,
**caractérisée en ce que**
les seconds coussinets de palier (18, 19) sont logés dans des perçages de palier (7, 8) du support (6).

13. Installation de frein à main (1) selon l'une des revendications 1 à 12,
**caractérisée en ce que**
le second bras de levier (10) est une pièce métallique emboutie.

14. Installation de frein à main (1) selon l'une des revendications 2 à 13,
**caractérisée en ce que**
la broche de liaison (11) est en un matériau ferreux et de préférence elle est soudée au second bras de levier (10).
